# EUROPÄISCHE PATENTSCHRIFT

(11) **EP 2 199 001 B1**
(45) Veröffentlichungstag und Bekanntmachung des Hinweises auf die Patenterteilung: **02.11.2011**
(21) Anmeldenummer: 08106027.9
(22) Anmeldetag: 22.12.2008
(51) Int. Cl.: B23D 51/10, B23D 49/16, B23D 47/02

(54) **Stichsäge mit einer Sägeblattaufnahme**
Jig saw with a saw blade fixture
Scie sauteuse dotée d'une réception de lame de scie

(43) Veröffentlichungstag der Anmeldung: 23.06.2010
(73) Patentinhaber: CEKAtec AG, 9630 Wattwil (CH)
(72) Erfinder: Zurkirchen, Marco, 8608 Bubikon (CH)
(74) Vertreter: Hepp Wenger Ryffel AG

(56) Entgegenhaltungen:
- DE-A1- 4 313 718
- DE-A1- 19 737 236
- US-A- 5 535 520
- US-A1- 2005 210 686
- US-A1- 2008 072 438

## Beschreibung

Die vorliegende Erfindung betrifft eine Stichsäge mit einer Sägeblattaufnahme.

Aus dem Stand der Technik sind schon verschiedene Stichsägen bekannt, welche Vorrichtungen zum werkzeuglosen Aufnehmen eines Sägeblattes aufweisen. So zeigt EP1964635A2 beispielsweise eine Stichsäge mit einer Sägeblattaufnahme, bei welcher der Schaft eines Sägeblattes verdreht in die Sägeblattaufnahme eingeführt und dann in die Arbeitsrichtung gedreht werden muss. Der Schaft liegt dann zwischen zwei auf ihrer Aussenseite keilförmigen Klemmbacken. Ein auf die Keilform einwirkendes Zuatzelementes kann mittels einer Drehung eines Hülsenteiles in Richtung der Hubbewegung des Sägeblattes verschoben werden, so dass über die Keilform die Klemmbacken zusammengepresst werden und der Schaft an seinen Flachseiten verklemmt wird.

DE102004042026A1 zeigt eine Spannvorrichtung zum werkzeuglosen Einspannen eines Sägeblattes einer Stichsäge. Es wird eine Variante gezeigt, in der das Sägeblatt an seiner flachen Seite aufgrund einer Klemmbewegung einer Klemmplatte, ausgelöst durch das Verschieben eines Hülsenteiles mit schrägen Kulissen, fixiert wird. Eine alternative Lösung zeigt ein Verschieben der Klemmplatte durch seitliche Bewegungen eines Stiftes auf einer Rampe der Klemmplatte. Auch die DE 19737236 offenbart eine Stichsäge mit einer Sägeblattaufnahme zum werkzeuglosen Befestigen eines Sägeblatts an der Stichsäge.

Die bekannten Sägeblattaufnahmen können zwar zum Teil Sägeblätter verschiedener Dicken aufnehmen, sind jedoch sehr komplex aufgebaut. Die bei Stichsägen typischen Vibrationen, ausgelöst durch die Hubbewegung der Sägeblattaufnahme und des Sägeblattes, können eine Verklemmung des Sägeblattes ungewollt lockern oder gar lösen. Ausserdem ist die Bedienung der Sägeblattaufnahme nicht oder nur bedingt in jeder Lage der Sägeblattaufnahme möglich.

Weitere bekannte Lösungen zeigen Klemmvorrichtungen, welche das Sägeblatt nur auf der schmalen Seite klemmen und somit das Sägeblatt nicht spielfrei aufnehmen können, was ein präzises Arbeiten mit der Stichsäge verunmöglicht.

Es ist Aufgabe der Erfindung, die Nachteile des Standes der Technik zu überwinden. Insbesondere sollen Sägeblätter verschiedener Stärken einfach, sicher und spielfrei aufgenommen werden. Insbesondere soll die Mechanik des Antriebs beim Transport der Stichsäge geschont werden.

Diese Aufgabe wird durch die in dem unabhängigen Patentanspruch definierte Vorrichtung gelöst. Weitere Ausführungsformen ergeben sich aus den abhängigen Patentansprüchen.

Eine Sägeblattaufnahme einer erfindungsgemässen Stichsäge zum werkzeuglosen Befestigen eines Sägeblattes an der Stichsäge umfasst in einer Ausführungsform ein Klemmelement, ein Gegenstück und wenigstens einen mit dem Klemmelement in Wirkverbindung stehenden Keil. Unter Wirkverbindung wird dabei verstanden, dass der Keil in Arbeitsstellung mit dem Klemmelement in Kontakt steht. Das Klemmelement kann mittels einer Verschiebung des Keils gegen einen zwischen dem Klemmelement und dem Gegenstück positionierbaren Schaft des Sägeblattes bewegt werden. Der Keil ist etwa senkrecht zu der Hubbewegung des Sägeblattes verschiebbar, wodurch dieser nicht durch dadurch entstehenden Vibrationen gelöst werden kann. Unter etwa senkrecht wird hier und im Folgenden ein Winkel von 90° +/-5° verstanden. Um eine zusätzliche Sicherheit gegen unbeabsichtigtes Lösen des Keils zu erreichen, kann dieser mit beliebigen Mittel zum Festlegen des Keils in Fixierposition versehen sein. Solche Mittel sind beispielsweise eine Feder, eine Fixierschraube, ein Rastelement oder ein Klemmsitz. Andere Mittel sind ebenfalls denkbar.

Das Klemmelement ist so positioniert, dass eine Anpressfläche des Klemmelements gegen eine Flachseite des Schaftes des Sägeblattes bewegbar ist. Dabei kann die Anpressfläche eine spezielle Kontur aufweisen, beispielsweise vorstehend teilweise zylinderförmig oder kugelförmig ausgestaltet sein, um eine linienförmige oder punktförmige Anpressung zu erhalten. Zusätzlich kann diese Anpressfläche noch eine spezielle Oberfläche, insbesondere eine gummiartige Beschichtung, ein Rändel oder Riefen aufweisen um eine erhöhte Reibung zwischen Klemmelement und Flachseite des Schaftes zu erreichen. Andere Ausgestaltungen sind ebenfalls denkbar. Durch das Verklemmen des Schaftes auf seiner Flachseite wird das Sägeblatt so fixiert, so dass kein Spiel quer zur Sägerichtung des Sägeblattes existiert und Schnittarbeiten präzise ausgeführt werden können. Da der Keil eine stufenlose Verstellung des Klemmelementes erlaubt, können Sägeblätter verschiedener Stärken spielfrei geklemmt werden.

Das Klemmelement kann um eine Achse drehbar am Gegenstück befestigt sein. Beispielsweise kann das Klemmelement mittels eines Stiftes am Gegenstück befestigt werden, was eine sehr einfache Konstruktion der Sägeblattaufnahme ermöglicht. Alternativ kann das Klemmelement mit einem Biegegelenk am Gegenstück befestigt sein. Andere Varianten sind ebenfalls denkbar.

Die Achse kann etwa parallel zur Flachseite des Schaftes des Sägeblattes in Arbeitsstellung verlaufen. Unter etwa parallel wird hier und im Folgenden ein Winkel von 0° +/- 5° verstanden. Wenn die Achse ausserdem etwa senkrecht zur Bewegungsrichtung des Sägeblattes verläuft, ist gewährleistet, dass die Flachseite des Schaftes des Sägeblattes gleichmässig von der Anpressfläche erfasst und somit gleichmässig mit der Anpresskraft beaufschlagt wird.

Das Klemmelement kann so am Gegenstück befestigt sein, dass sich das Klemmelement bei weg geschobenem Keil automatisch in eine geöffnete Position bewegt. Dies hat den Vorteil, dass die Sägeblattaufnahme offen steht und bereit ist, ein Sägeblatt kraftfrei aufzunehmen oder freizugeben. Ein solches automatisches Öffnen der Sägeblattaufnahme kann dadurch erreicht werden, dass das Klemmelement mit einer Federkraft beaufschlagt wird oder aber über eine Führungskulisse mit dem Keil zusammenwirkt.

Das Klemmelement kann seitlich an der Anpressfläche mindestens einen Vorsprung aufweist, welcher über die Anpressfläche hervorsteht. Beim Verklemmen des Schaftes des Sägeblattes greift dieser Vorsprung hinter einen Nocken bekannter Sägeblätter. Dieser mindestens eine Vorsprung ist dabei so positioniert, dass die Nocken bekannter T-Schafte oder Einnockenschafte gefasst werden. Es ist auch denkbar, dass der Vorsprung so ausgestaltet ist, dass Nocken bekannter Doppelnockenschafte hintergriffen werden können. Dabei ist es für die Erfindung irrelevant, ob bei den Doppelnockenschaften nur die unteren und/oder die oberen Nocken hintergriffen werden. Ebenso ist es denkbar, dass der Vorsprung nicht seitlich der Anpressfläche angeordnet ist, sondern innerhalb und/oder bezogen auf die Hubrichtung des Sägeblattes vor und/oder hinter der Anpressfläche. Somit würde auch ein zuverlässiges Fassen von Aussparungen, wie sie beispielsweise beim so genannten "Makita-Schaft" vorgesehen sind, ermöglicht. Mit einem solchen Hintergreifen der Nocken bzw. Eingreifen in Aussparungen wird ein ungewolltes Ausreissen des Schaftes aus der Sägeblattaufnahme verhindert.

Das Gegenstück kann zur besseren Aufnahme des Schaftes eine der Form des Schaftes entsprechende nutförmige Schaftaufnahme aufweisen. Die Breite der Schaftaufnahme entspricht dabei etwa der Breite des aufzunehmenden Schaftes. Ein gewisses Spiel des Schaftes in der Schaftaufnahme ist nicht weiter relevant, da es sich dabei um ein Spiel handelt, welches in der Schnittrichtung des Sägeblattes liegt. Es versteht sich von selbst, dass die Breite der Schaftaufnahme jedoch grösser als die Breite des Schaftes ist. Ein quer zur Sägerichtung liegendes Spiel wird durch die genannte Klemmung der Flachseite verhindert. Die Tiefe der Schaftaufnahme entspricht in etwa der Stärke handelsüblicher Stichsägeblätter. Durch die Klemmung auf die Flachseite des Schaftes können mit einer gegebenen Tiefe der Sägeblattaufnahme verschieden starke Sägeblätter aufgenommen werden.

Die Stichsäge kann zusätzlich ein Betätigungselement umfassen, welches an einer fixen Position aus dem Gehäuse ragt. Das Betätigungselement ist so ausgestaltet, dass dieses unabhängig von der Position der Sägeblattaufnahme mit dem Keil in Kontakt bringbar ist und ein Verschieben des Keils ermöglicht. Dadurch wird ein Auswechseln des Sägeblattes in jeder Position der Sägeblattaufnahme möglich.

Aus dem Stand der Technik zeigt beispielsweise GB2421214A eine Stichsäge mit einem Zusatzteil in Form eines höhenverstellbaren Sägetisches. Der zusätzliche höhenverstellbare Sägetisch kann an den bestehenden Sägetisch einer Stichsäge befestigt werden und erlaubt ein Einstellen der Schnitttiefe der Stichsäge.

Es hat sich als Nachteil erwiesen, dass ein Einstellen der Schnitttiefe der Stichsäge durch eine Höhenverstellung des Sägetisches in einem wesentlich unruhigeren Lauf des Sägeblattes resultiert, was ein präzises Arbeiten mit der Stichsäge erschwert. Es ist eine weitere Aufgabe der Erfindung, die Nachteile des Standes der Technik zu lösen, insbesondere einen ruhigen Lauf des Sägeblattes sicherzustellen und die Schnitttiefe des Sägeblattes zu verstellen.

Diese Aufgabe wird durch die im abhängigen Anspruch 10 definierte Vorrichtung gelöst. Weitere Ausführungsformen ergeben sich aus den abhängigen Ansprüchen.

Die Ausführungsform einer Stichsäge gemäss Anspruch 10, welche für sich alleine oder in Kombination mit der vorgängig genannten Ausführungsform vorteilhaft ist, beinhaltet eine Sägeblattaufnahme, welche lösbar in mindestens zwei Arbeitspositionen mit einem Antrieb der Stichsäge, insbesondere mit einem beweglichen mit einem Antrieb der Stichsäge verbundenen Zwischenelement, fixierbar ist. Die Arbeitspositionen sind dabei in Hubrichtung der Stichsägeaufnahme übereinander angeordnet. Dadurch wird ermöglicht, dass ein Stichsägeblatt, insbesondere wenn dieses mehrheitlich zum Sägen dünner Werkstücke benutzt wird, an verschiedenen Positionen des Sägeblattes verwendet werden kann. Somit kann die Standzeit eines Sägeblattes wesentlich erhöht werden. Dadurch dass die Sägeblattaufnahme verstellt wird und nicht die Höhe des Sägetisches, ist das Sägeblatt weiterhin in gewohnter Weise nahe dem Werkstück geführt. Es entsteht somit kein unruhiger Lauf der Stichsäge.

Die erfindungsgemässe Stichsäge, welche für sich alleine oder in Kombination mit der vorgängig genannten Ausführungsform vorteilhaft ist, beinhaltet eine Sägeblattaufnahme, welche lösbar in einer relativ zum Gehäuse der Stichsäge unbeweglichen Parkposition fixierbar ist. Insbesondere für den Transport hat es sich als vorteilhaft erwiesen, dass die Mechanik des Antriebes der Stichsäge geschont werden kann, wenn die Sägeblattaufnahme vom Antrieb entkoppelt werden kann.

Ausserdem kann die Parkposition so angeordnet sein, dass sich das Sägeblatt im Wesentlichen komplett im Innern des Gehäuses der Stichsäge befindet. Dabei wird unter im Wesentlichen komplett im Innern des Gehäuses verstanden, dass das Sägeblatt nicht über den Sägetisch hervorsteht. Es ist denkbar, dass die Stichsäge mehrere Parkpositionen aufweist um verschieden lange Stichsägeblätter aufzunehmen. Die Parkposition kann aber auch so angeordnet sein, dass nur die marktüblichen Standardsägeblätter komplett zurückgezogen werden können. Es versteht sich von selbst, dass eine solche Anordnung der Parkposition, bzw. der Sägeblattaufnahme und des Sägeblattes die Gefahr von Verletzungen bei unsachgemässer Bedienung enorm verringert.

Die Sägeblattaufnahme kann ein bewegliches Verbindungsmittel aufweisen, mittels welchem die Sägeblattaufnahme in den Arbeitspositionen mit einer am Zwischenelement angeordneten oder in der Parkposition mit einer mit dem Gehäuse verbundenen Aufnahmevorrichtung verbindbar ist. Die Kombination von Verbindungsmittel und Aufnahmevorrichtung erlaubt eine sichere und einfache Verbindung in der Arbeitsposition mit dem Zwischenelement bzw. in der Parkposition mit dem Gehäuse. Ausserdem kann das Verbindungsmittel so ausgestaltet sein, dass dieses ohne Werkzeug bedient werden kann. Das Verbindungsmittel kann beispielsweise als Stift ausgebildet sein, welcher in die Aufnahmevorrichtungen beispielsweise in Form von Aussparungen im Zwischenelement eingreifen und so die Verbindung sicherstellen. Ebenso kann das Gehäuse oder ein zusätzliches Hilfsteil mit einer entsprechenden Aufnahmevorrichtung ausgestaltet sein. Es sind auch andere Kombinationen von Verbindungsmittel und Aufnahmevorrichtungen denkbar.

Das Verbindungsmittel kann mit einer Verriegelungsfeder in Richtung der Aufnahmevorrichtung vorgespannt sein, so dass ein unbeabsichtigtes Lösen aus den Arbeitspositionen oder der Parkposition verhindert wird. Gleichzeitig kann durch eine geeignete Ausgestaltung des Zwischenelements und der Aussparung für die Parkposition erreicht werden, dass eine Sägeblattaufnahme, deren Verbindungsmittel nicht korrekt in einer Arbeitsposition eingerastet ist, durch die Bewegung des Zwischenelements in die Parkposition geschoben wird und dort automatisch verriegelt. Somit ist eine zusätzliche Vorsichtsmassnahme geschaffen, welche unbedachte Personen vor Verletzungen durch das bewegte Sägeblatt schützt.

Die Sägeblattaufnahme kann durch mindestens ein Führungselement beweglich gelagert sein. Durch die zusätzliche Führung der Sägeblattaufnahme kann verhindert werden, dass die Lagerung des beweglichen Zwischenelements über Gebühr beansprucht wird. So kann beispielsweise die Sägeblattaufnahme auf einem Schlitten montiert sein, welcher über eine eigene Lagerung beweglich mit dem Gehäuse verbunden ist. Eine solche Lagerung kann beispielsweise eine Gleitlager-Führungsstangen-Kombination darstellen. Andere Ausführungen eines beweglichen Lagers sind ebenfalls denkbar.

Die Stichsäge kann zusätzlich ein Bedienelement umfassen, welches an einer fixen Position aus dem Gehäuse ragt. Das Bedienelement ist so ausgestaltet, dass es unabhängig von der Position der Sägeblattaufnahme mit dem Verbindungsmittel in Kontakt bringbar ist und ein Verschieben des Verbindungsmittels ermöglicht. Dadurch wird ein Verstellen der Arbeitsposition oder ein Verstellen in der Parkposition in jeder Lage der Sägeblattaufnahme möglich. Vorzugsweise ragt das Bedienelement auf der dem Betätigungselement zur Bedienung des Keils gegenüberliegenden Seite aus dem Gehäuse.

Im Stand der Technik zeigt beispielsweise DE7338651U eine Stichsäge mit einem Sägetisch, welcher während des Sägens entgegen einer Federkraft nach hinten verschoben werden kann. Ein Nachteil dieser Vorrichtung besteht darin, dass ein Verschieben des Sägetisches während des Sägens zwar möglich ist, diese Möglichkeit der Verschiebung jedoch nur mit einem Werkzeug durch ein Lösen einer Schraubverbindung möglich ist. Ebenfalls muss für die Fixierung wiederum mit einem Werkzeug die Schraubverbindung betätigt werden.

Es ist eine weitere Aufgabe der Erfindung, die Nachteile des Standes der Technik zu lösen, insbesondere ein Verschieben und Fixieren des Sägetisches ohne Werkzeug zu ermöglichen.

Diese Aufgabe wird durch die im abhängigen Anspruch 7 definierte Vorrichtung gelöst. Weitere Ausführungsformen ergeben sich aus den abhängigen Ansprüchen.

Diese Ausführungsform einer Stichsäge, welche für sich alleine oder in Kombination mit den vorgängig genannten Ausführungsformen vorteilhaft sein könnte, beinhaltet einen Sägetisch, welcher in Sägerichtung relativ zu einem Gehäuse der Stichsäge zwischen einer vorderen und einer hinteren Position verschiebbar ist. Somit kann beispielsweise beim randseitigen Ansetzten an ein Werkstück der Sägetisch so nach vorne verstellt werden, dass er über die Schnittkante des Sägeblattes hervortritt und ein Abstützen der Stichsäge auf dem Werkstück erlaubt, bevor das Sägeblatt in das Werkstück eingreift. Dadurch wird ein präzises Arbeiten erleichtert. Wenn jedoch mit der Stichsäge bis an eine Kante oder an einen Absatz gesägt werden muss, kann beispielsweise der Sägetisch in eine hintere Position gestellt werden, so dass diese bündig mit der Schnittkante des Sägeblattes verläuft. Der Sägetisch kann beispielsweise mittels einer T-Schiene mit dem Gehäuse beweglich verbunden sein. Dadurch kann der Sägetisch bei Bedarf auch durch einen anderen Sägetisch ersetzt werden. Die T-Schiene kann in der vorderen und hinteren Position je einen Anschlag aufweisen, so dass ein Ausrasten des Sägetisches verhindert wird. Dieser Anschlag kann gleichzeitig die vordere und die hintere Position definieren. Der Sägetisch kann in einer hinteren Position automatisch verriegelbar sein. Diese Verriegelung kann beispielsweise so ausgestaltet sein, dass der Sägetisch beim Sägen durch Anstossen an einer Kante oder an einem Absatz während des Sägens in die hintere Position geschoben werden kann, wo er dann automatisch verriegelt. Anstelle einer Führung mittels einer T-Schiene sind auch andere Führungsarten denkbar.

Der Sägetisch kann einen Entriegelungsstift aufweisen, welcher ein Lösen in der hinteren Position ermöglicht. Dadurch kann ein Verstellen in die vordere Position ohne den Einsatz von Werkzeugen erfolgen. Mit Hilfe des Entriegelungsstift kann gleichzeitig auch die erwähnte Verriegelung erfolgen.

Der Sägetisch selber kann mit einer Feder in die vordere Position vorgespannt sein. Somit muss der Sägetisch entgegen der Federkraft in die hintere Position gedrückt werden, wo er dann verriegelt. Dieses Verriegeln kann beispielsweise mit dem Entriegelungsstift erfolgen. Hierzu kann der Entriegelungsstift beispielsweise mittels einer Feder vorgespannt sein und in der hinteren Position des Sägetisches in einer Aussparung des Gehäuses der Stichsäge verrasten. Alternativ kann der Entrieglungsstift aber auch am Gehäuse der Stichsäge angebracht sein und mit einer Feder vorgespannt in einen Schlitz des Sägetisches eingreifen. Dieser Schlitz kann an seinem vorderen Ende eine Verbreiterung aufweisen, so dass bei Erreichen der hinteren Position der Entriegelungsstift in diese Verbreiterung eindringt und jede weitere Bewegung, insbesondere ein Verschieben in die vordere Position des Sägetisches blockiert. Zum Lösen kann nun der Entriegelungsstift gedrückt werden, so dass dieser wieder in den Schlitz eingreift und der Sägetisch von der Feder nach vorne gedrückt wird. In der vorderen Position kann ein Dämpfungselement, beispielsweise in Form eines Gummipuffers integriert sein, welches die durch die Feder beschleunigte Masse des Sägetisches sanft abfängt. Durch geeignete Anordnung des Entriegelungsstiftes kann der Sägetisch sogar während des Sägens verstellt werden.

Anhand von Figuren, welche lediglich Ausführungsbeispiele darstellen, wird die Erfindung im Folgenden näher erläutert. Es zeigen:
- **Figur 1:**: eine erfindungsgemässe Stichsäge ohne Sägetisch,
- **Figur 2a:**: eine Seitenansicht auf die Sägeblattaufnahme aus Fi- gur 1,
- **Figur 2b:**: einen Schnitt entlang der Ebene A-A gemäss Figur 2a,
- **Figur 2c:**: einen Schnitt entlang der Ebene B-B gemäss Figur 2a,
- **Figur 2d:**: eine isometrische Darstellung des Gegenstücks mit ei- nem Sägeblatt,
- **Figur 3a:**: eine Seitenansicht auf die Sägeblattaufnahme mit Schlitten und Antrieb aus Figur 1,
- **Figur 3b:**: einen Schnitt entlang der Ebene A-A gemäss Figur 3a,
- **Figur 3c:**: einen Schnitt entlang der Ebene B-B gemäss Figur 3b,
- **Figur 3d:**: eine isometrische Darstellung der Sägeblattaufnahme mit Schlitten und Antrieb gemäss Figur 3a,
- **Figur 4a:**: eine Frontansicht auf die Sägeblattaufnahme mit Schlitten, Zwischenelement, Bedien- und Betätigungs- element aus Figur 1,
- **Figur 4b:**: eine isometrische Darstellung der Sägeblattaufnahme mit Schlitten, Zwischenelement, Bedien- und Betäti- gungselement gemäss Figur 4a,
- **Figur 4c:**: einen Schnitt entlang der Ebene A-A gemäss Figur 4a,
- **Figur 4d:**: einen Schnitt entlang der Ebene B-B gemäss Figur 4a,
- **Figur 5a:**: eine Seitenansicht einer erfindungsgemässen Stichsä- ge,
- **Figur 5b:**: einen Schnitt entlang der Ebene A-A gemäss Figur 5a,
- **Figur 5c:**: einen Schnitt entlang der Ebene B-B gemäss Figur 5b,
- **Figur 5d:**: einen Schnitt entlang der Ebene C-C gemäss Figur 5b.

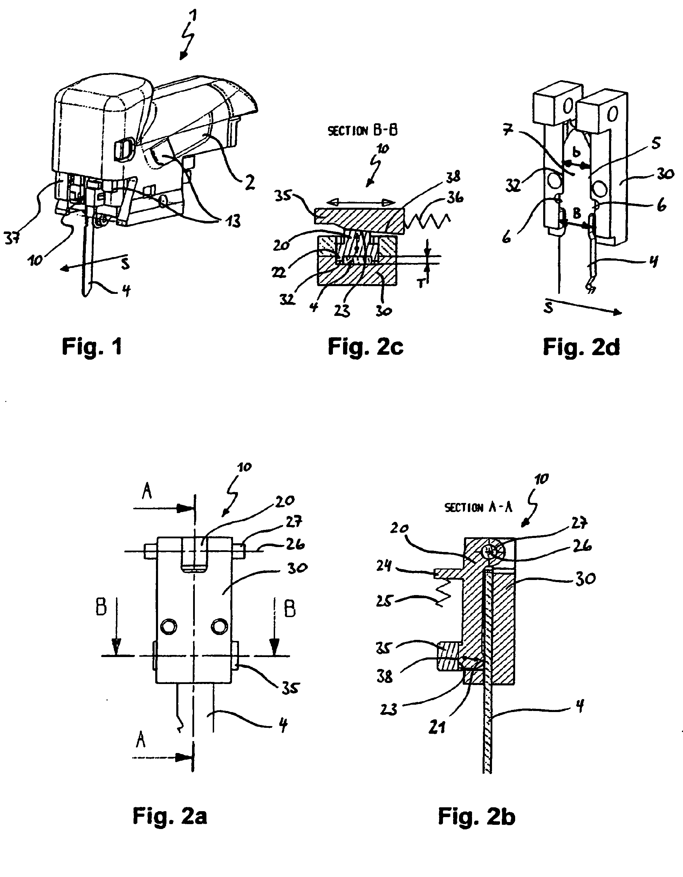

**Figur 1** zeigt eine erfindungsgemässe Stichsäge 1, wobei der Sägetisch entfernt ist. Das Gehäuse 2 weist in Sägerichtung S seitlich ein Bedienelement 13 auf, welches aus dem Gehäuse 2 ragt. In Sägerichtung S am vorderen Ende der Stichsäge 1 weist das Gehäuse 2 eine Öffnung auf, wo eine Sägeblattaufnahme 10 sowie ein Betätigungselement 37 zum Lösen eines Sägeblattes 4 und das Bedienelement 13 zum Verstellen der Sägeblattaufnahme sichtbar sind.

In den **Figuren 2a bis 2d** ist die Sägeblattaufnahme 10 im Detail dargestellt. Die Sägeblattaufnahme 10 besteht im Wesentlichen aus einem Klemmelement 20, einem Gegenstück 30 und einem Keil 35, welcher das Klemmelement 20 an das Gegenstück 30 presst. Das Klemmelement 20 ist mit einem Stift 27 am Gegenstück 30 befestigt und kann um die Achse 26 geschwenkt werden.

Ein Sägeblatt 4 wird mit seinem Schaft 5 in einer nutförmigen Schaftaufnahme 32 des Gegenstücks 30 aufgenommen. Dabei ist die Breite B der Schaftaufnahme 32 so gewählt, dass sie etwa der Breite b des Schaftes 5 entspricht. Ein vorhandenes Spiel zwischen der Breite B der Schaftaufnahme 32 und der Breite b des Schaftes 5 fällt im Betrieb der Stichsäge nicht ins Gewicht, da es sich hierbei um ein Spiel in Sägerichtung S handelt. Die Tiefe T der Schaftaufnahme 32 entspricht etwa der Stärke handelsüblicher Stichsägeblätter 4. Ein genaues Übereinstimmen ist dabei nicht notwendig, weil das Klemmelement 20 auf die Flachseite 7 des Schaftes 5 drückt und so Toleranzschwankungen kompensiert. Gleichzeitig wird ein präzises Arbeiten gewährleistet.

Das Klemmelement 20 weist eine speziell geformte Anpressfläche 21 auf, welche den Kontakt mit dem Schaft 5 des Sägeblattes 4 gewährleistet. Im gezeigten Beispiel in Figur 2b ist die Anpressfläche 21 teilweise vorstehend zylinderförmig ausgestaltet. Wie in Figur 2c zu erkennen ist, weist das Klemmelement 20 seitlich an der Anpressfläche je ein Vorsprung 22 auf, welche einen Nocken 6 des Schaftes 5 hintergreift. Somit kann sichergestellt werden, dass das Sägeblatt 4 nicht versehentlich aus der Sägeblattaufnahme 32 herausrutschen kann. Die Vorsprünge 22 sind so positioniert, dass diese auf die Nocken 6 der Schafte 5 handelsüblicher Stichsägeblätter passen. Im gezeigten Ausführungsbeispiel handelt es sich um ein Stichsägeblatt 4 mit einem Einnocken- oder T-Schaft.

Der Keil 35 ist horizontal verschiebbar und wirkt mit seiner Keilfläche 38 auf eine Gleitfläche 23 des Klemmelements 20. Der Keil 35 ist selbstverständlich auf der Gegenseite geführt gelagert, was jedoch nicht dargestellt ist. Der Keil 35 ist durch eine Keilfeder 36 vorgespannt, so dass dieser im Normalzustand auf das Klemmelement 20 drückt und die Sägeblattaufnahme 20 geschlossen ist.

Das Klemmelement 20 weist in Figur 2b einen Federanschlag 24 auf, auf den eine Öffnungsfeder 25 einwirkt. Die Öffnungsfeder 25 ist an ihrem, dem Federanschlag 24 gegenüberliegenden Ende mit dem Gegenstück 30 verbunden (nicht gezeigt) und bewirkt ein automatisches Öffnen des Klemmelements 20 sobald der Keil 35 zur Seite geschoben wird. Somit kann ein Sägeblatt 4 kraftfrei entfernt bzw. eingesetzt werden. Alternative Lösungen sind denkbar, so kann beispielsweise das Klemmelement 20 auch über eine Führungskulisse mit dem Keil 35 verbunden werden, so dass das Verschieben des Keils 35 ein Öffnen des Klemmelements 20 bewirkt.

Die Materialien des Keils 35 und des Klemmelements 20, sowie der Winkel der Keilfläche 38 und der Gleitfläche 23 sind so gewählt, dass diese möglichst reibungsfrei aufeinander gleiten. Im gezeigten Ausführungsbeispiel betragen die Winkel je 5°, der Keil 35 und das Klemmelement 20 bestehen aus Stahl, vorzugsweise aus gehärtetem Stahl. Andere Materialkombinationen, insbesondere mit unterschiedlichen Materialien von Keil und Klemmelement sowie andere Winkel sind denkbar.

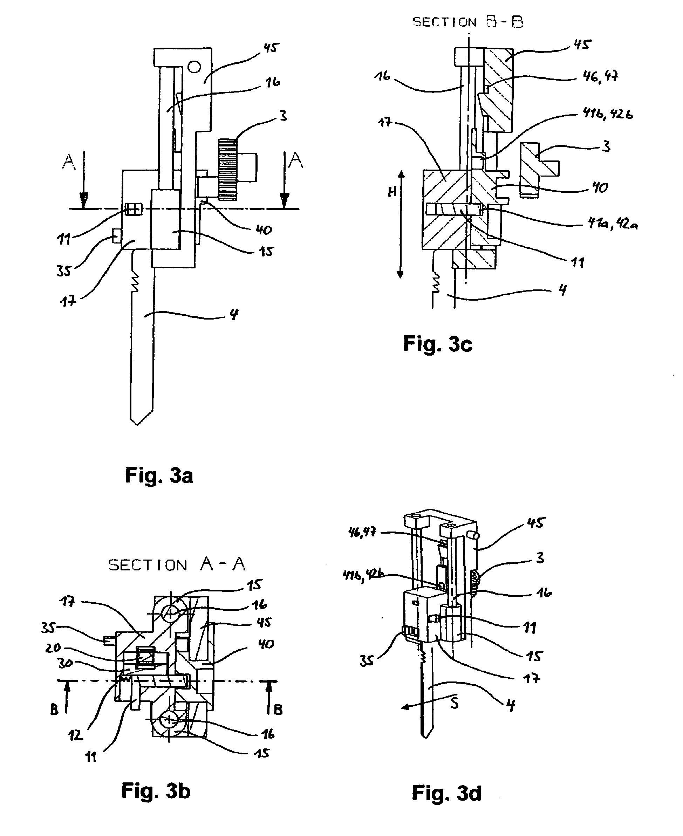

In den **Figuren 3a bis 3d** ist die Sägeblattaufnahme 10 eingebaut in einem Schlitten 17 gezeigt. Der Schlitten 17 wird mittels eines Führungselementes 15 in Form eines Gleitlagers an Führungsstangen 16 einer Basis 45 geführt. Der Schlitten 17 ist lösbar mit einem beweglichen Zwischenelement 40 verbunden. Das Zwischenelement 40 ist beweglich an der Basis 45 geführt und mit dem Antrieb 3 der Stichsäge verbunden. Somit führt der Schlitten 17, die Sägeblattaufnahme 10 und auch das Sägeblatt 4 die vom Antrieb 3 vorgegebene Bewegung aus.

Wie in Figur 3c gezeigt, ist der Schlitten 17 mit einem Verbindungsmittel 11, welches an seinem eine Ende seitlich aus dem Schlitten hervorragt und mit seinem anderen Ende in eine erste Aufnahmevorrichtung 42a eingreift, mit dem Zwischenelement 40 in einer ersten Arbeitsposition 41a verbunden. Das Zwischenelement 40 weist im gezeigten Ausführungsbeispiel zwei in Richtung der Hubbewegung H des Sägeblattes 4 übereinander liegende Arbeitspositionen 41a, 41b und entsprechend zwei Aufnahmevorrichtungen 42a, 42b auf, eine andere Anzahl ist jedoch ebenfalls denkbar. Das Verbindungsmittel 11 ist stiftförmig ausgebildet. Die Aufnahmevorrichtungen 42a, 42b sind entsprechend als Ausnehmungen ausgebildet. Andere Ausgestaltungen sind denkbar. Das Verbindungsmittel 11 ist mit einer Verriegelungsfeder 12 (siehe Figur 3b) vorgespannt, so dass es sicher in einer die Arbeitsposition 41a, 41b definierenden Aufnahmevorrichtungen 42a, 42b des Zwischenelements 40 sitzt. Das Verbindungsmittel 11 kann gegen die Federkraft der Verriegelungsfeder 12 aus der Aufnahmevorrichtung 42a des Zwischenelements 40 gezogen werden, was ein Verschieben des Schlittens 17 in beispielsweise die zweite Arbeitsposition 41b erlaubt. Somit kommt bei einem nachfolgenden Gebrauch der Stichsäge 1 nicht mehr derselbe Bereich des Sägeblattes 4 zum Einsatz. Insbesondere beim Sägen von dünnen Werkstücken kann somit die Standzeit des Sägeblattes 4 verdoppelt werden.

Die Basis 45, welche fest mit dem Gehäuse 2 der Stichsäge 1 verbunden ist, weist eine einer Parkposition 46 entsprechende Aufnahmevorrichtung 47 auf, in welcher das Verbindungsmittel 11 verriegeln kann. Im gezeigten Ausführungsbeispiel handelt es sich um eine schlitzartige Ausnehmung. Diese Parkposition 46 befindet sich so weit über den beiden Arbeitspositionen 41, so dass der Schlitten 17 mit der Sägeblattaufnahme 10 so weit in das Gehäuse hinein geschoben und fixiert werden kann, dass das Sägeblatt 4 nicht mehr durch einen Sägetisch dringt. Natürlich ist in dieser Parkposition 46 die Sägeblattaufnahme 10 nicht mehr mit dem Antrieb 3 gekoppelt, so dass ein Betätigen des Antriebes 3 keine Gefahr darstellt. Die Basis 45 weist im Bereich der Aufnahmevorrichtung 47 eine Rampe auf, so dass das Verbindungsmittel 11, wenn dieses nicht auf dem Zwischenelement 40 steht, beim Betätigen des Antriebs 3 automatisch in die Aufnahmevorrichtung 47 der Parkposition 46 geschoben wird.

In Sägerichtung an der Vorderseite des Schlittens 17 steht der Keil 35 aus dem Schlitten 17 hervor, so dass die Bedienung der Sägeblattaufnahme 10, bzw. ein Lösen des Klemmelements 20 vom Gegenstück 30 ermöglicht wird.

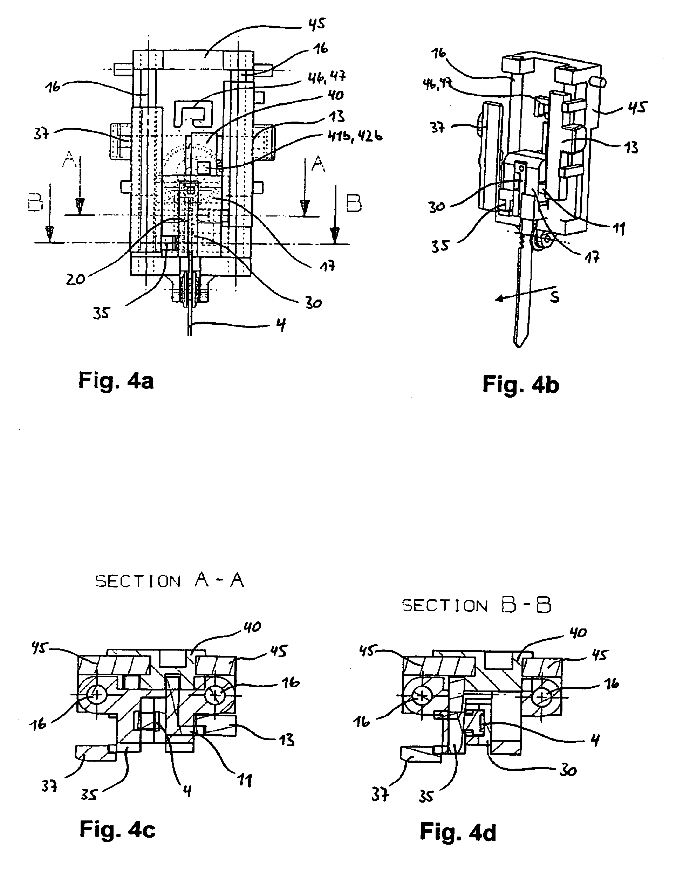

Die **Figuren 4a bis 4d** zeigen die Sägeblattaufnahme 10 eingebaut im Schlitten 17 mit dem Zwischenelement 40, einem Bedienelement 13 und einem Betätigungselement 37 für den Keil 35 und das Verbindungsmittel 11. Ausserdem ist auch die Basis 45 mit den beiden Führungsstangen 16 zu erkennen.

In Sägerichtung links neben dem Schlitten 17 ist ein Bedienelement 13 angeordnet, mittels welchem das Verbindungsmittel 11 entgegen der Kraft der Verriegelungsfeder 12 (siehe Figur 3b) bewegt werden kann. Im gezeigten Ausführungsbeispiel hintergreift das Bedienelement 13 das Verbindungsmittel 11 (siehe Figur 4c). Das Bedienelement 13 verläuft über die gesamte Hubhöhe des Schlittens 17, so dass in jeder Position des Schlittens 17 ein Lösen des Verbindungsmittels 11 aus den Aufnahmevorrichtungen 42a, 42b, 47 der Arbeitspositionen 41a, 41b oder der Parkposition 46 möglich ist. Das Bedienelement 13 weist etwa mittig eine knopfförmige Ausbuchtung auf, welche durch das Gehäuse der Stichsäge (nicht gezeigt) hindurchragt und somit die Betätigung des Bedienelements 13 von ausserhalb des Gehäuses ermöglicht.

Ein Betätigungselement 37 ist in Sägerichtung rechts neben dem Schlitten 17 angeordnet. Dieses Betätigungselement 37 erlaubt ein Drücken des aus dem Schlitten 17 herausragenden Keils 35 entgegen der Kraft der Keilfeder. Das Betätigungselement 37 verläuft ebenfalls über den gesamten Bereich des Hubes des Schlittens 17. Somit kann der Keil 35 in jeder Position des Schlittens 17 betätigt werden, so dass sich das Klemmelement 20 in Pfeilrichtung (siehe Figur 4d) vom Gegenstück 30 löst und das Sägeblatt 4 freigibt.

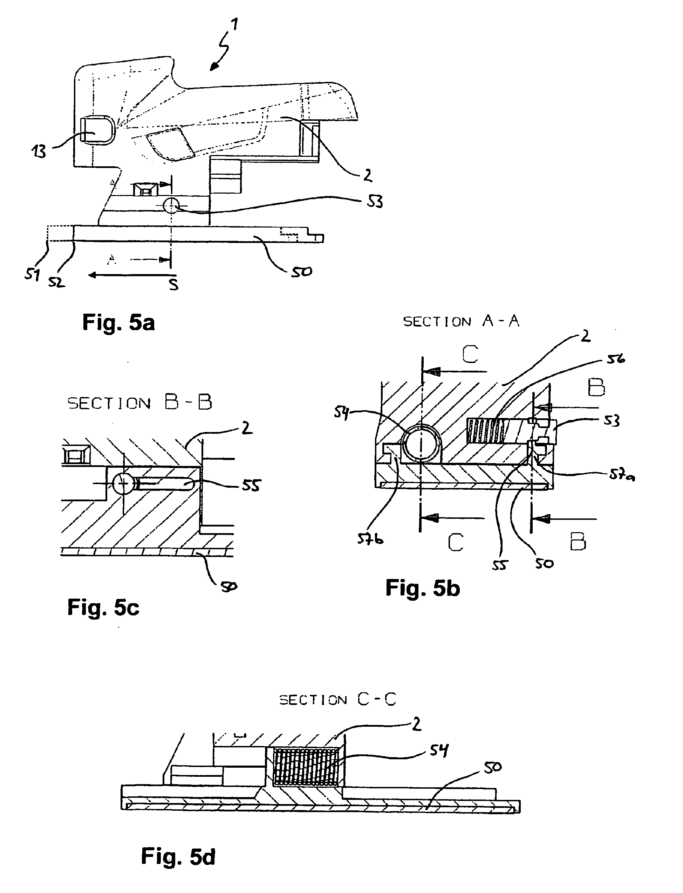

Die **Figuren 5a bis 5d** zeigen die Stichsäge 1 und Details des Sägetisches 50. Der Sägetisch 50 ist in Sägerichtung S relativ zum Gehäuse 1 beweglich zwischen einer vorderen Position 51 und einer hinteren Position 52 verschiebbar. In der Figur 5a sind diese beiden Positionen 51, 52 dargestellt, wobei die vordere Position 51 durch eine gestrichelte Linie gezeigt ist. Ebenfalls ist in dieser Figur auch das Bedienelement 13 zur Betätigung des Verbindungsmittels sichtbar. Ein Entriegelungsstift 53 dient dem Lösen des Sägetisches 50 aus der hinteren Position 52. Der Sägetisch 50 ist mittels zweier T-Schienen 57a, 57b am Gehäuse 2 befestigt und wird von einer Feder 54 (siehe Figur 5d) in die vordere Position 51 vorgespannt. Andere Führungsarten sind ebenso denkbar. Ein seitlicher Schlitz 55 in der T-Schiene 57a dient zusammen mit einem darin eingreifenden Entriegelungsstift 53 als vorderer und hinterer Anschlag.

Der Entriegelungsstift 53 sitzt in einer Ausnehmung im Gehäuse 2 der Stichsäge 1 und wird mit einer Verriegelungsfeder 56 (siehe Figur 5b) gegen die T-Schiene gedrückt. Gleichzeitig greift er in den Schlitz 55 ein. Der Schlitz 55 ist an seinem vorderen, der hinteren Position 51 des Sägetisches entsprechenden Ende aufgeweitet, so dass der Entriegelungsstift 53 teilweise darin Platz findet. Bei Erreichen der hinteren Position 52 des Sägetisches 50 wird nun durch die Verriegelungsfeder 56 der Entriegelungsstift 53 teilweise in den aufgeweiteten Schlitz gedrückt, so dass der Sägetisch 50 in dieser Position 52 verriegelt. Zum Lösen der Verriegelung und zum Verstellen des Sägetisches 50 in die vordere Position 51 muss der Entriegelungsstift 53 soweit gedrückt werden, dass dieser wieder in den Schlitz 55 eingreifen kann. Durch die Kraft der Feder 54 wird der Schlitten dann automatisch in die vordere Position 51 verschoben. In der vorderen Position 51 ist ein Dämpfungselement in Form eines Gummipuffers (nicht gezeigt) integriert sein, welches die durch die Feder beschleunigte Masse des Sägetisches sanft abfängt.

## Patentansprüche

1. Stichsäge (1) mit einer sägeblattaufnahme (10) zum werkzeuglosen Befestigen eines Sägeblattes (4) an der Stichsäge (1), **dadurch gekennzeichnet, dass** die Sägeblattaufnahme (10) lösbar in einer relativ zum Gehäuse (2) der Stichsäge (1) unbeweglichen Parkposition (46) fixierbar ist.

2. Stichsäge (1) gemäss Patentanspruch 1, **dadurch gekennzeichnet, dass** die Parkposition (46) derart angeordnet ist, dass sich das Sägeblatt (4) im Wesentlichen komplett im Innern des Gehäuses (2) befindet.

3. Stichsäge (1) gemäss einem der Patentansprüche 1 oder 2, **dadurch gekennzeichnet, dass** die Sägeblattaufnahme (10) ein bewegliches Verbindungsmittel (11) aufweist, mittels welchem die Sägeblattaufnahme (10) in einer der Arbeitspositionen (41a, 41b) mit einer am Zwischenelement (40) angeordneten oder in der Parkposition (46) mit einer mit dem Gehäuse (2) verbundenen Aufnahmevorrichtung (42a, 42b, 47) verbindbar ist.

4. Stichsäge (1) gemäss Patentanspruch 3, **dadurch gekennzeichnet, dass** das Verbindungsmittel (11) mit einer Verriegelungsfeder (12) in Richtung der Aufnahmevorrichtung 42a, 42b, 47) vorgespannt ist.

5. Stichsäge (1) gemäss einem der Patentansprüche 1 bis 4, **dadurch gekennzeichnet, dass** die Sägeblattaufnahme (10) durch mindestens ein Führungselement (15), beweglich gelagert ist.

6. Stichsäge (1) gemäss einem der Patentansprüche 3 bis 5, **dadurch gekennzeichnet, dass** die Stichsäge (1) zusätzlich ein an einer fixen Position aus dem Gehäuse (2) ragendes Bedienelement (13) umfasst, welches mit dem Verbindungsmittel (11) unabhängig von der Position der Sägeblattaufnahme (10) in Kontakt bringbar ist und somit ein Verschieben des Verbindungsmittels (11) ermöglicht.

7. Stichsäge (1) gemäss einem der Patentansprüche 1 bis 6 mit einem Sägetisch (50) **dadurch gekennzeichnet, dass** der Sägetisch (1) in Sägerichtung (S) relativ zu einem Gehäuse (2) der Stichsäge (1) zwischen einer vorderen Position (51) und einer hinteren Position (52) verschiebbar ist und dass der Sägetisch (1) in der hinteren Position (52) automatisch verriegelbar ist.

8. Stichsäge (1) gemäss Patentanspruch 7, **dadurch gekennzeichnet, dass** der Sägetisch (50) einen Entriegelungsstift (53) zum lösen des Sägetisches (50) von der hinteren Position (52) aufweist.

9. Stichsäge (1) gemäss einem der Patentansprüche 1 oder 8, **dadurch gekennzeichnet, dass** der Sägetisch (50) mit einer Feder (54) in die vordere Position (51) vorgespannt ist.

10. Stichsäge (1) gemäss einem der Patentansprüche 1 bis 9, **dadurch gekennzeichnet, dass** die Sägeblattaufnahme (10) lösbar in mindestens zwei Arbeitspositionen (41) mit einem Antrieb (3) der Stichsäge (1), insbesondere mit einem beweglichen mit dem Antrieb (3) verbundenen Zwischenelement (40), fixierbar ist.

11. Stichsäge (1) gemäss einem der Patentansprüche 1 bis 10, **dadurch gekennzeichnet, dass** die Sägeblattaufnahme ein Klemmelement (20), ein Gegenstück (30) und wenigstens einen mit dem Klemmelement (20) in Wirkverbindung stehenden Keil (35) umfasst, wobei das Klemmelement (20) mittels einer Verschiebung des Keils (35) gegen einen zwischen Klemmelement (20) und Gegenstück (30) positionierbaren Schaft (5) des Sägeblattes (4) bewegbar ist, der Keil (35) etwa senkrecht zu der Bewegungsrichtung des Sägeblattes (4) verschiebbar ist.

12. Stichsäge (1) gemäss Patentanspruch 11, **dadurch gekennzeichnet, dass** das Klemmelement so positioniert ist, dass eine Anpressfläche (21) des Klemmelements (20) gegen eine Flachseite (7) des Schaftes (5) des Sägeblattes (4) bewegbar ist.

13. Stichsäge (1) gemäss einem der Patentansprüche 11 oder 12, **dadurch gekennzeichnet, dass** das Klemmelement (20) um eine Achse (26) drehbar am Gegenstück (30) befestigt ist.

14. Stichsäge (1) gemäss Patentanspruch 13, **dadurch gekennzeichnet, dass** die Achse (26) etwa parallel zur Flachseite (7) des Schaftes (5) des Sägeblattes (4) in Arbeitsstellung und etwa senkrecht zur Bewegungsrichtung des Sägeblattes (4) verläuft.

15. Stichsäge (1) gemäss einem der Patentansprüche 11 bis 14, **dadurch gekennzeichnet, dass** das Klemmelement (20) so am Gegenstück (30) befestigt sein, dass sich das Klemmelement (20) bei weg geschobenem Keil (35) automatisch in eine geöffnete Position bewegt.

16. Stichsäge (1) gemäss einem der Patentansprüche 12 oder 15, **dadurch gekennzeichnet, dass** das Klemmelement (20) seitlich an der Anpressfläche (21) mindestens einen Vorsprung (22) aufweist, welcher über die Anpressfläche (21) hervorsteht.

17. Stichsäge (1) gemäss einem der Patentansprüche 11 bis 16, **dadurch gekennzeichnet, dass** das Gegenstück (30) eine nutförmige Schaftaufnahme (32) aufweist, welche in ihrer Breite (B) etwa der Breite (b) des Schaftes (5) des Sägeblattes (4) entspricht.

18. Stichsäge (1) gemäss einem der Patentansprüche 11 bis 17, **dadurch gekennzeichnet, dass** die Stichsäge (1) zusätzlich ein an einer fixen Position aus dem Gehäuse (2) ragendes Betätigungselement (37) umfasst, welches mit dem Keil (35) unabhängig von der Position der Sägeblattaufnahme (10) in Kontakt bringbar ist und somit ein Verschieben des Keils (35) ermöglicht.

## Claims

1. Jig saw (1) having a saw blade holder (10) for the toolless fastening of a saw blade (4) to the jig saw (1), **characterized in that** the saw blade holder (10) can be releasably fixed in a parking position (46) that is immovable relative to the housing (2) of the jig saw (1).

2. Jig saw (1) according to Patent Claim 1, **characterized in that** the parking position (46) is arranged such that the saw blade (4) is located substantially fully inside the housing (2).

3. Jig saw (1) according to one of Patent Claims 1 or 2, **characterized in that** the saw blade holder (10) has a movable connecting means (11), by means of which the saw blade holder (10) is connectable, in one of the working positions (41a, 41b), to a mounting fixture (42a, 42b, 47) disposed on the intermediate element (40) or, in the parking position (46), to a mounting fixture (42a, 42b, 47) connected to the housing (2).

4. Jig saw (1) according to Patent Claim 3, **characterized in that** the connecting means (11) is pretensioned in the direction of the mounting fixture (42a, 42b, 47) with a locking spring (12).

5. Jig saw (1) according to one of Patent Claims 1 to 4, **characterized in that** the saw blade holder (10) is movably supported by at least one guide element (15).

6. Jig saw (1) according to one of Patent Claims 3 to 5, **characterized in that** the jig saw (1) additionally comprises a control element (13), which juts out of the housing (2) at a fixed position and which, irrespective of the position of the saw blade holder (10), can be brought into contact with the connecting means (11) and thus enables a displacement of the connecting means (11).

7. Jig saw (1) according to one of Patent Claims 1 to 6, having a saw bench (50), **characterized in that** the saw bench (50) is displaceable in the sawing direction (S), relative to a housing (2) of the jig saw (1), between a front position (51) and a rear position (52), and **in that** the saw bench (50) is automatically lockable in the rear position (52).

8. Jig saw (1) according to Patent Claim 7, **characterized in that** the saw bench (50) has an unlocking pin (53) for releasing the saw bench (50) from the rear position (52).

9. Jig saw (1) according to one of Patent Claims 1 or 8, **characterized in that** the saw bench (50) is pretensioned into the front position (51) with a spring (54).

10. Jig saw (1) according to one of Patent Claims 1 to 9, **characterized in that** the saw blade holder (10) can be releasably fixed in at least two working positions (41) with a drive (3) of the jig saw (1), in particular with a movable intermediate element (40) connected to a drive (3).

11. Jig saw (1) according to one of Patent Claim 1 to 10, **characterized in that** the saw blade holder comprises a clamping element (20), a counterpart (30), and at least one wedge (35) in operative connection with the clamping element (20), the clamping element (20) being movable by means of a displacement of the wedge (35) against a shaft (5) of the saw blade (4), which shaft is positionable between the clamping element (20) and the counterpart (30), the wedge (35) being displaceable roughly perpendicular to the motional direction of the saw blade (4).

12. Jig saw (1) according to Patent Claim 11, **characterized in that** the clamping element is positioned such that a pressing surface (21) of the clamping element (20) is movable against a flat side (7) of the shaft (5) of the saw blade (4).

13. Jig saw (1) according to one of Patent Claims 11 or 12, **characterized in that** the clamping element (20) is fastened to the counterpart (30) rotatably about an axis (26).

14. Jig saw (1) according to Patent Claim 13, **characterized in that** the axis (26) runs roughly parallel to the flat side (7) of the shaft (5) of the saw blade (4) in the working position and roughly perpendicular to the motional direction of the saw blade (4).

15. Jig saw (1) according to one of Patent Claims 11 to 14, **characterized in that** the clamping element (20) is fastened to the counterpart (30) such that the clamping element (20) moves automatically into an open position when the wedge (35) is pushed away.

16. Jig saw (1) according to one of Patent Claims 12 or 15, **characterized in that** the clamping element (20) has on the side of the pressing surface (21) at least one projection (22), which protrudes over the pressing surface (21).

17. Jig saw (1) according to one of Patent Claims 11 to 16, **characterized in that** the counterpart (30) has a groove-shaped shaft holder (32), which in terms of its width (B) roughly corresponds to the width (b) of the shaft (5) of the saw blade (4).

18. Jig saw (1) according to one of Patent Claims 11 to 17, **characterized in that** the jig saw (1) additionally comprises an actuating element (37), which juts out of the housing (2) at a fixed position and which, irrespective of the position of the saw blade holder (10), can be brought into contact with the wedge (35) and thus enables a displacement of the wedge (35).

## Revendications

1. Scie sauteuse (1) dotée d'un logement de lame de scie (10) pour la fixation sans outil d'une lame de scie (4) à la scie sauteuse (1), **caractérisée en ce que** le logement de lame de scie (10) peut être fixé de manière amovible dans une position de rangement (46) immobile par rapport au boîtier (2) de la scie sauteuse (1).

2. Scie sauteuse (1) selon la revendication 1, **caractérisée en ce que** la position de rangement (46) est disposée de telle sorte que la lame de scie (4) se trouve essentiellement complètement à l'intérieur du boîtier (2).

3. Scie sauteuse (1) selon l'une quelconque des revendications 1 ou 2, **caractérisée en ce que** le logement de lame de scie (10) présente un moyen de connexion mobile (11) au moyen duquel le logement de lame de scie (10) peut être connecté dans l'une des positions de travail (41a, 41b) à un dispositif de réception (42a, 42b, 47) disposé sur l'élément intermédiaire (40) ou peut être connecté dans la position de rangement (46) à un dispositif de réception (42a, 42b, 47) connecté au boîtier (2).

4. Scie sauteuse (1) selon la revendication 3, **caractérisée en ce que** le moyen de connexion (11) est précontraint avec un ressort de verrouillage (12) dans la direction du dispositif de réception (42a, 42b, 47).

5. Scie sauteuse (1) selon l'une quelconque des revendications 1 à 4, **caractérisée en ce que** le logement de lame de scie (10) est monté de manière déplaçable par le biais d'au moins un élément de guidage (15).

6. Scie sauteuse (1) selon l'une quelconque des revendications 3 à 5, **caractérisée en ce que** la scie sauteuse (1) comprend en outre un élément de commande (13) saillant hors du boîtier (2) dans une position fixe, qui peut être amené en contact avec le moyen de connexion (11) indépendamment de la position du logement de lame de scie (10), et qui permet ainsi un déplacement du moyen de connexion (11).

7. Scie sauteuse (1) selon l'une quelconque des revendications 1 à 6, comprenant une table à scier (50), **caractérisée en ce que** la table à scier (1) peut être déplacée dans la direction de sciage (S) par rapport à un boîtier (2) de la scie sauteuse (1) entre une position avant (51) et une position arrière (52) et **en ce que** la table à scier (1) peut être verrouillée automatiquement dans la position arrière (52).

8. Scie sauteuse (1) selon la revendication 7, **caractérisée en ce que** la table à scier (50) présente une goupille de déverrouillage (53) pour desserrer la table de sciage (50) de la position arrière (52).

9. Scie sauteuse (1) selon l'une quelconque des revendications 1 ou 8, **caractérisée en ce que** la table à scier (50) est précontrainte avec un ressort (54) dans la position avant (51).

10. Scie sauteuse (1) selon l'une quelconque des revendications 1 à 9, **caractérisée en ce que** le logement de lame de scie (10) peut être fixé de manière desserrable dans au moins deux positions de travail (41) avec un entraînement (3) de la scie sauteuse (1), en particulier avec un élément intermédiaire (40) connecté de manière déplaçable à l'entraînement (3).

11. Scie sauteuse (1) selon l'une quelconque des revendications 1 à 10, **caractérisée en ce que** le logement de lame de scie comprend un élément de serrage (20), une pièce conjuguée (30) et au moins une clavette (35) en liaison fonctionnelle avec l'élément de serrage (20), l'élément de serrage (20) pouvant être déplacé au moyen d'un déplacement de la clavette (35) contre une tige (5) de la lame de scie (4) pouvant être positionnée entre l'élément de serrage (20) et la pièce conjuguée (30), la clavette (35) étant déplaçable approximativement perpendiculairement à la direction de déplacement de la lame de scie (4).

12. Scie sauteuse (1) selon la revendication 11, **caractérisée en ce que** l'élément de serrage est positionné de telle sorte qu'une surface de pressage (21) de l'élément de serrage (20) puisse être déplacée contre un côté plat (7) de la tige (5) de la lame de scie (4).

13. Scie sauteuse (1) selon l'une quelconque des revendications 11 ou 12, **caractérisée en ce que** l'élément de serrage (20) est fixé sur la pièce conjuguée (30) de manière à pouvoir tourner autour d'un axe (26).

14. Scie sauteuse (1) selon la revendication 13, **caractérisée en ce que** l'axe (26) s'étend approximativement parallèlement au côté plat (7) de la tige (5) de la lame de scie (4) dans la position de travail et approximativement perpendiculairement à la direction de déplacement de la lame de scie (4).

15. Scie sauteuse (1) selon l'une quelconque des revendications 11 à 14, **caractérisée en ce que** l'élément de serrage (20) peut être fixé à la pièce conjuguée (30) de telle sorte que l'élément de serrage (20) se déplace automatiquement dans une position ouverte lorsque la clavette (35) est repoussée.

16. Scie sauteuse (1) selon l'une quelconque des revendications 12 ou 15, **caractérisée en ce que** l'élément de serrage (20) présente, latéralement sur la surface de pressage (21), au moins une saillie (22) qui dépasse au-delà de la surface de pressage (21).

17. Scie sauteuse (1) selon l'une quelconque des revendications 11 à 16, **caractérisée en ce que** la pièce conjuguée (30) présente un logement de tige (32) en forme de rainure, qui correspond de par sa largeur (B) approximativement à la largeur (b) de la tige (5) de la lame de scie (4).

18. Scie sauteuse (1) selon l'une quelconque des revendications 11 à 17, **caractérisée en ce que** la scie sauteuse (1) comprend en outre un élément d'actionnement (37) faisant saillie dans une position fixe hors du boîtier (2), qui peut être amené en contact avec la clavette (35) indépendamment de la position du logement de lame de scie (10) et qui permet ainsi un déplacement de la clavette (35).
